# EUROPEAN PATENT APPLICATION

(11) **EP 4 617 968 A1**
(43) Date of publication of application: **17.09.2025**
(21) Application number: 24163916.0
(22) Date of filing: 15.03.2024
(51) Int. Cl.: G06Q 10/0639, G06Q 10/101

(54) **ENHANCING USER INTERACTION EXPERIENCE IN INDUSTRIAL METAVERSE THROUGH ANALYTICS-BASED EXPERIENCE TESTING**

(71) Applicant: Siemens Aktiengesellschaft, 80333 München (DE)
(72) Inventor: MANICKAM, Ramesh, 560100 Bangalore, Karnataka (IN)
(74) Representative: HKW Intellectual Property PartG mbB

(57) **Abstract**

Disclosed herein is a computer-implemented method (400) for enhancing user interaction experience. The method (400) includes obtaining (404), for each user of a plurality of users, data associated with a corresponding user while a corresponding avatar associated with the corresponding user is performing a plurality of interactions in a computer-simulated environment. Further, the method (400) includes determining (406), using a first AI model for each user, a plurality of parameters associated with the plurality of interactions. Further, the method (400) includes analysing (408), for each user using a second AI model, the plurality of parameters to determine a user experience of the corresponding user. Furthermore, the method (400) includes determining (410), for each user using a third AI model, one or more cues when the determined user experience is negative. Furthermore, the method (400) includes providing (412), to each user, the one or more cues to enhance the user experience.

## Description

The present invention generally relates to Multiuser Virtual Environment (MUVE) systems, and more particularly relates to a system and a method for enhancing user interaction experience in an industrial metaverse.

The industrial metaverse is a multiuser virtual environment in which users enter into a virtual world as an avatar. The avatars serve as digital representations of the users within the virtual environment. Each user enters in the virtual environment to solve real-world problems in the virtual environment. In industrial scenarios, such as the B2B context, the avatars play a critical role in addressing real-life challenges.

To perform a task in the virtual environment, the user needs to perform multiple interactions in the virtual environment. Each of these multiple interaction touch points adds up to the experience of the user. If any interaction touch point does not meet the needs of the user, the experience of the user becomes frustrating.

The currently available methods solve the above-discussed problem by gauging the point of frustration of the user based on the context of the user and providing a solution to enhance the user experience. For this, the currently available methods perform the experience testing at each interaction touch point. In the regular experience testing used in the currently available methods, data is collected and analysed manually. The data may be collected using A/B testing, feedback, or surveys. The manual experience testing consumes much time as the number of interaction touch points increases.

The above-discussed problem is further scaled up when multiple users are using the same virtual environment to solve different problems. In the multiuser virtual environment, it is practically impossible to do regular experience testing at every single touch point.

In light of the above, there exists a need to enhance user interaction experience in the industrial metaverse in a faster and more efficient manner by gauging the point of frustration of the user in the industrial metaverse.

Therefore, it is an object of the present invention to provide a system and a method for enhancing the user interaction experience in the industrial metaverse.

The object of the present invention is achieved by a computer-implemented method for enhancing user interaction experience in a computer-simulated environment. The method includes obtaining, by one or more processors, for each user of a plurality of users in real-time, data associated with a corresponding user while a corresponding avatar associated with the corresponding user is performing a plurality of interactions in the computer-simulated environment to complete a task. Further, the method includes determining, by the one or more processors, using a first Artificial Intelligence (AI) model for each user, a plurality of parameters associated with the plurality of interactions by the corresponding avatar based on the obtained data. Further, the method includes analysing, by the one or more processors for each user using a second AI model, the plurality of parameters to determine a user experience of the corresponding user. Furthermore, the method includes determining, by the one or more processors for each user using a third AI model, one or more cues based on the determined user experience is negative. Furthermore, the method includes providing, by the one or more processors to each user, the one or more cues to enhance the user experience by assisting the corresponding user to complete the task efficiently.

In an embodiment, the method further includes generating, by the one or more processors, a plurality of avatars corresponding to the plurality of users in the computer-simulated environment based on the plurality of users entering into the computer-simulated environment. Further, the method includes tracking, by the one or more processors, for each user using one or more sensors, one or more activities of the corresponding user while the corresponding avatar associated with the corresponding user is performing the plurality of interactions. Furthermore, the method includes obtaining, by the one or more processors, for each user in the real-time, the data based on the tracking of the one or more activities of the corresponding user.

In an embodiment, the plurality of parameters includes at least one of learnability, proficiency, effectiveness, efficiency, impact, productiveness, and collaboration.

In an embodiment, the method further includes analysing, by the one or more processors, the plurality of parameters based on one of a scenario associated with the corresponding user, a cognitive profiling of the corresponding user, or an objective of the task. Furthermore, the method includes determining, by the one or more processors, the user experience based on the analysis of the plurality of parameters.

In an embodiment, the one or more cues are determined using the third AI model based on a set of pre-defined rules for each scenario associated with the corresponding user.

In an embodiment, the one or more cues include one of a sensory cue, a navigation guidance, a recommendation, or feedback information.

In an embodiment, the sensory cue includes one of a visual cue, an audio signal, or a change in affordance for the corresponding user.

The object of the present invention is also achieved by a system for enhancing user interaction experience in a computer-simulated environment. The system includes a memory and one or more processors communicatively coupled to the memory. The memory includes programmable instructions executable by the one or more processors. The programmable instructions, when executed by the one or more processors, cause the one or more processors to perform one or more methods, as discussed throughout the present invention.

The object of the present invention is also achieved by a cloud server for enhancing user interaction experience in a computer-simulated environment. The cloud server includes a memory and one or more processors communicatively coupled to the memory. The memory includes programmable instructions executable by the one or more processors. The programmable instructions, when executed by the one or more processors, cause the one or more processors to perform one or more methods, as discussed throughout the present invention.

The object of the present invention is also achieved by a computer-program product being disclosed. The computer-program product has machine-readable instructions stored therein, that when executed by one or more processors, cause the one or more processors to perform one or more methods, as discussed throughout the present invention.

The object of the present invention is also achieved by a non-transitory computer-readable medium being disclosed. The non-transitory computer-readable medium is encoded with executable instructions, that when executed by one or more processors, cause the one or more processors to perform one or more methods, as discussed throughout the present invention.

To further clarify the advantages and features of the present invention, a more particular description of the invention will be rendered by reference to specific embodiments thereof, which are illustrated in the appended drawings. It is appreciated that these drawings depict only typical embodiments of the invention and are therefore not to be considered limiting of its scope. The invention will be described and explained with additional specificity and detail with the accompanying drawings.

These and other features, aspects, and advantages of the present invention will become better understood when the following detailed description is read with reference to the accompanying drawings in which like characters represent like parts throughout the drawings, wherein:
FIG. 1 is an overview of an environment comprising a system for enhancing user interaction experience in a computer-simulated environment, according to an embodiment of the present invention;
FIG. 2 is a block diagram of the system for enhancing the user interaction experience in the computer-simulated environment, according to an embodiment of the present invention;
FIG. 3 illustrates a functional block diagram of the system for enhancing the user interaction experience in the computer-simulated environment, according to an embodiment of the present invention; and
FIG. 4 illustrates an exemplary process flow depicting a method for enhancing the user interaction experience in the computer-simulated environment, according to an embodiment of the present invention.

Further, skilled artisans will appreciate that elements in the drawings are illustrated for simplicity and may not have necessarily been drawn to scale. For example, the flow charts illustrate the method in terms of the most prominent steps involved to help to improve understanding of aspects of the present invention. Furthermore, in terms of the construction of the device, one or more components of the device may have been represented in the drawings by conventional symbols, and the drawings may show only those specific details that are pertinent to understanding the embodiments of the present invention so as not to obscure the drawings with details that will be readily apparent to those of ordinary skill in the art having the benefit of the description herein.

For the purpose of promoting an understanding of the principles of the invention, reference will now be made to the various embodiments and specific language will be used to describe the same. It will nevertheless be understood that no limitation of the scope of the invention is thereby intended, such alterations and further modifications in the illustrated system, and such further applications of the principles of the invention as illustrated therein being contemplated as would normally occur to one skilled in the art to which the invention relates.

It will be understood by those skilled in the art that the foregoing general description and the following detailed description are explanatory of the invention and are not intended to be restrictive thereof.

Reference throughout this specification to "an aspect", "another aspect" or similar language means that a particular feature, structure, or characteristic described in connection with the embodiment is included in at least one embodiment of the present invention. Thus, appearances of the phrase "in an embodiment", "in another embodiment" and similar language throughout this specification may, but do not necessarily, all refer to the same embodiment.

The terms "comprises", "comprising", or any other variations thereof, are intended to cover a non-exclusive inclusion, such that a process or method that comprises a list of steps does not include only those steps but may include other steps not expressly listed or inherent to such process or method. Similarly, one or more devices or sub-systems or elements or structures or components proceeded by "comprises... a" does not, without more constraints, preclude the existence of other devices or other sub-systems or other elements or other structures or other components or additional devices or additional sub-systems or additional elements or additional structures or additional components.

Throughout the present disclosure, the term "industrial metaverse" as used herein refers to a multiuser virtual world environment that mirrors and simulates real machines, factories, and other highly complex systems. The industrial metaverse is a fully immersive, real-time simulation of the real world. The term "avatar" as used herein refers to a graphical representation of a user within the multiuser virtual world environment. The term "computer-simulated environment", "industrial metaverse", "virtual environment", and "multiuser virtual environment" may be used interchangeably throughout the disclosure without departing from the scope of the disclosure.

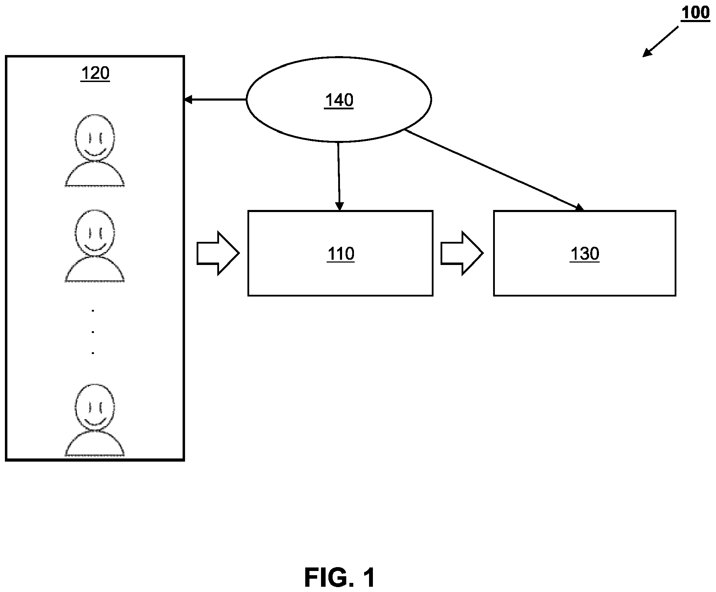

FIG. 1 is an overview of an environment 100 comprising a system 140 for enhancing user interaction experience in a computer-simulated environment, according to an embodiment of the present invention.

As shown in FIG. 1, the environment 100 comprises an application 110 for enhancing user interaction experience in a computer-simulated environment. The application 110 is a virtual world application stored in a memory of the system 140. The virtual world application may be a client application or a server application.

The application 110 receives an input from an input unit 120 when a user among a plurality of users enters into a virtual world. Further, the application 110 generates an avatar of the user entering into the virtual world. Further, the application 110 monitors data associated with the user while the avatar associated with the user performs a plurality of interactions in the virtual world. Thereafter, the application 110 determines a plurality of parameters associated with the plurality of interactions by the avatar based on the obtained data. Further, the application 110 then analyse the plurality of parameters to determine a user experience of the user. Thereafter, the application 110 determines one or more cues when the determined user experience is negative. Then, the application 110 outputs the one or more cues to an output unit 130. The system 140 is configured to manage the functionality of the application 110, the input unit 120, and the output unit 130.

The output unit 130 provides the one or more cues to the user to enhance the user experience by assisting the user to complete the task efficiently.

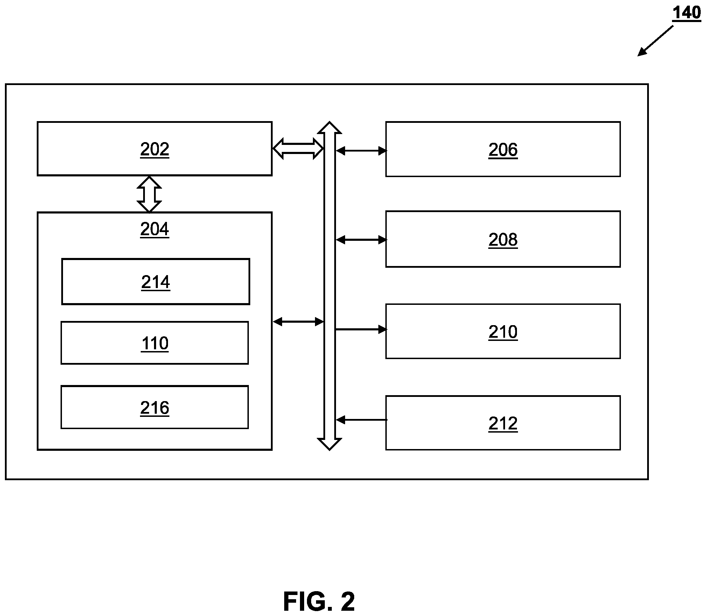

FIG. 2 is a block diagram of the system 140 for enhancing the user interaction experience in the computer-simulated environment, according to an embodiment of the present invention.

In an embodiment, the system 140 may be a cloud-based system, such as a cloud server. In such an embodiment, the functionality of the system 140 is provided by the cloud server, and the details provided with respect to the system 140 would be applicable for the cloud server.

In another embodiment, the system 140 may be hosted on one or more user devices associated with an organization, a company, an industry, or one or more individuals. In an exemplary embodiment, the one or more user devices include electronic devices such as a laptop computer, a desktop computer, a smartphone, an Augmented Reality/Virtual Reality (AR/VR) device, and the like.

In an embodiment, the system 140 is provided in a distributed manner, in that, one or more components and/or functionalities of the system 140 are provided through an electronic device, and one or more components and/or functionalities of the system 140 are to be provided through a cloud-based unit.

The system 140 includes a processor 202, a memory 204, a communication unit 206, an Input/Output (I/O) interface 208, a display unit 210, and a sensor unit 212.

The processor(s) 202 can be a single processing unit or several units, all of which could include multiple computing units. The processor 202 may be implemented as one or more microprocessors, microcomputers, microcontrollers, digital signal processors, central processing units, state machines, logic circuitries, and/or any devices that manipulate signals based on operational instructions. Among other capabilities, the processor 202 is configured to fetch and execute computer-readable instructions and data stored in the memory 204.

The memory 204 includes one or more computer-readable storage media. The memory 204 may include non-volatile storage elements. Examples of such non-volatile storage elements may include magnetic hard discs, optical discs, floppy discs, flash memories, or forms of electrically programmable memories (EPROM) or electrically erasable and programmable (EEPROM) memories. In addition, the memory may, in some examples, be considered a non-transitory storage medium. The term "non-transitory" may indicate that the storage medium is not embodied in a carrier wave or a propagated signal. However, the term "non-transitory" should not be interpreted to mean that the memory is non-movable. In certain examples, a non-transitory storage medium may store data that can, over time, change (e.g., in Random Access Memory (RAM) or cache.

The memory 204 may further include any non-transitory computer-readable medium known in the art including, for example, volatile memory, such as static random-access memory (SRAM) and dynamic random-access memory (DRAM), and/or non-volatile memory, such as read-only memory (ROM), erasable programmable ROM, flash memories, hard disks, optical disks, and magnetic tapes.

The memory 204 includes a database 214, the application 110, and an Artificial Intelligence/Machine learning (AI/ML) module 216.

The database 214 is configured to be accessed by the processor 202 and stores information as required by the processor 202 to perform the one or more functions. The database 214 may store the data of each of the plurality of users while the user is performing the plurality of interactions in the multiuser virtual environment. The database 214 may also store historical data associated with past interactions performed by each of the plurality of users in the multiuser virtual environment.

If the system 140 is the cloud-based system, the application 110 is the server application. Further, if the system 140 is hosted on one or more user devices, the application 110 is the client application.

The AI/ML module 216 may include a first AI model, a second AI model, and a third AI model. Each AI model may include a plurality of neural network layers. Examples of neural networks include but are not limited to, convolutional neural network (CNN), deep neural network (DNN), recurrent neural network (RNN), and Restricted Boltzmann Machine (RBM). The learning technique for training each AI model uses a plurality of learning data to cause, allow, or control the system 140 to make a determination or analysis. Examples of learning techniques include but are not limited to supervised learning, unsupervised learning, semi-supervised learning, or reinforcement learning. At least one of a plurality of CNN, DNN, RNN, RMB models and the like may be implemented to thereby achieve execution of the present subject matter's mechanism through the AI models. A function associated with the AI/ML module 216 may be performed through the non-volatile memory, the volatile memory, and the processor 202.

The communication unit 206 is configured to communicate voice, video, audio, images, sensor data, or any other content over a communication network. Further, the communication unit 206 may include a communication port or a communication interface for sending and receiving signals from the system 140 via the communication network. The communication port or the communication interface may be a part of the processor 202 or may be a separate component. The communication port may be created in software or may be a physical connection in hardware. The communication port may be configured to connect with the communication network, external media, the display, or any other components in the system 140, or combinations thereof. The connection with the communication network may be a physical connection, such as a wired Ethernet connection, or may be established wirelessly as discussed above. Likewise, the additional connections with other components of the system 140 may be physical or may be established wirelessly. The communication unit 206 may include the Wi-Fi module or Bluetooth module for enabling wireless communication capability and data exchange capability between the system 140 and the network.

The I/O interface 208 refers to hardware or software components that enable communication between the system 140 and other devices or systems. The I/O interface 208 serves as a communication medium for exchanging information, commands, signals, or query responses with other devices or systems. The I/O interface 208 may be a part of the processor 202 or maybe a separate component. The I/O interface 208 may be created in software or maybe a physical connection in hardware. The I/O interface 208 may be configured to connect with an external network, external media, the display, or any other components, or combinations thereof. The external network may be a physical connection, such as a wired Ethernet connection, or may be established wirelessly.

The display unit 210 is configured to display a virtual environment to the user. The display unit 210 may be an Augmented Reality/Virtual Reality (AR/VR) device to display a virtual environment to the user. The display unit 210 may include a display screen. As a non-limiting example, the display screen may be Light Emitting Diode (LED), Liquid Crystal Display (LCD), Organic Light Emitting Diode (OLED), Active Matrix Organic Light Emitting Diode (AMOLED), or Super Active Matrix Organic Light Emitting Diode (AMOLED) screen. The display screen may be of varied resolutions.

The sensor unit 212 includes the one or more sensors configured to capture data associated with the plurality of the users. The one or more sensors may include a biometric sensor, one or more image sensors, a positioning sensor, and other sensors. The data associated with the plurality of users may include 3D positioning information of the user, biometric data of the user, eye focus information of the user, head moment information of the user, hand moment information of the user, and other information associated with the user.

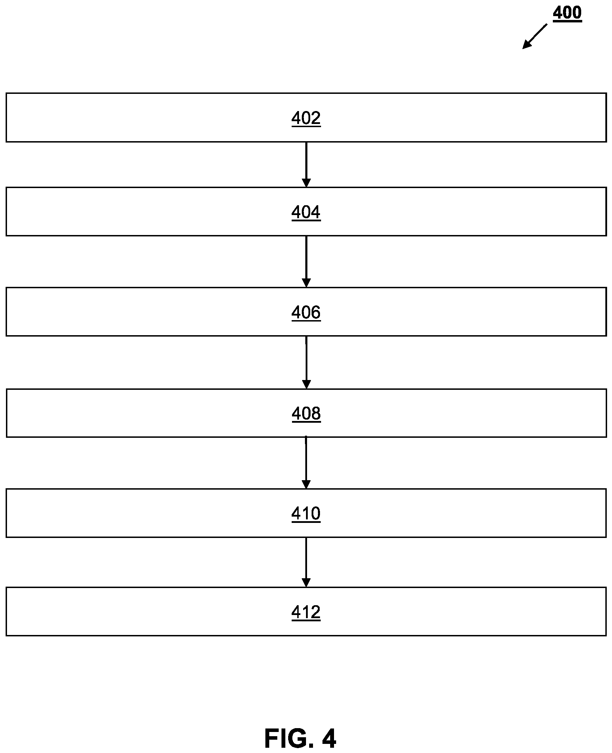

In an embodiment, the present invention also contemplates a computer-program product, having machine-readable instructions stored therein, when executed by the processor 202, cause the processor 202 to perform a method for enhancing the user interaction experience in the computer-simulated environment. The details on the method(s) performed by the processor 202 have been elaborated in subsequent paragraphs at least with reference to FIG. 4.

Further, the present invention also contemplates a non-transitory computer-readable medium encoded with executable instructions. The executable instructions, when executed by the processor 202, cause the processor 202 to perform a method for enhancing the user interaction experience in the computer-simulated environment. The details on the method(s) performed by the processor 202 have been elaborated in subsequent paragraphs at least with reference to FIG. 4.

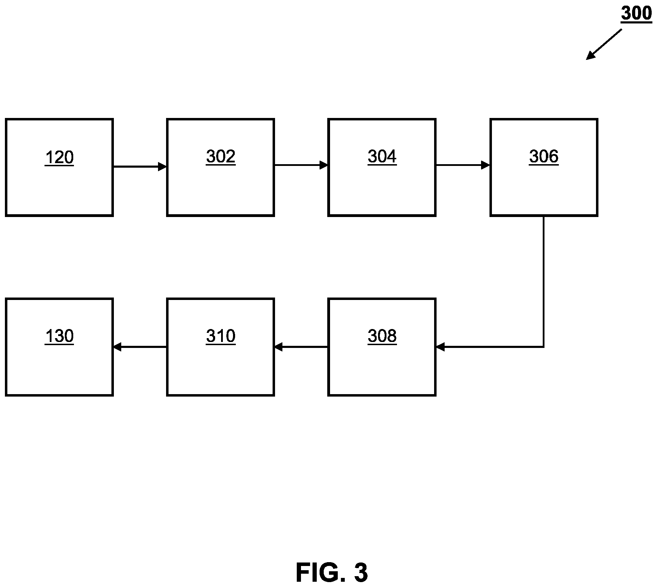

FIG. 3 illustrates a functional block diagram 300 of the system 140 for enhancing the user interaction experience in the computer-simulated environment, according to an embodiment of the present invention.

The functional block diagram 300 of the system 140 includes one or more functional units (or one or more modules). The one or more functional units are realized by the application 110 stored in the memory 204. These processor 202 controls the function of the one or more functional units via the application 110.

The one or more functional units includes the input unit 120, an avatar generation unit 302, a data monitoring unit 304, a data analysis unit 306, a parameter analysis unit 308, an interaction experience enhancer toolkit engine 310, and the output unit 130.

The input unit 120 identifies a user from the plurality of users whenever the user enters into the industrial metaverse. The input unit 120 sends information indicating that the user enters into the industrial metaverse to the avatar generation unit 302.

The avatar generation unit 302 receives the information indicating that the user enters into the industrial metaverse. The avatar generation unit 302 generates the avatar of the user when the avatar enters into the industrial metaverse. The avatar generation unit 302 may generate the plurality of avatars for the plurality of the users.

The user enters into the industrial metaverse to perform a task. To perform the task the user needs to perform the plurality of interactions in the industrial metaverse. The points of these interactions are termed interaction touch points. At each interaction touch point, the data associated with the user is collected.

The data monitoring unit 304 monitors and collects the data associated with the user while the avatar associated with the user performs the plurality of interactions in the virtual world. For instance, the data monitoring unit 304 tracks, using the one or more sensors, one or more activities of the user when the user is performing the plurality of interactions. Then, the data monitoring unit 304 data obtains the data associated with the based on tracking of the one or more activities of the user.

The data associated with the user may include at least one of the 3D positioning information of the user, the biometric data of the user, the eye focus information of the user, the head moment information of the user, and the hand moment information of the user. The data monitoring unit 304 may monitor the data for each user of the plurality of users. The data monitoring unit 304 sends the data to the data analysis unit 306.

The data analysis unit 306 obtains the data associated with the user from the data monitoring unit 304. The data analysis unit 306 also determines the plurality of parameters associated with the plurality of interactions of the user in the industrial metaverse.

The plurality of parameters associated with the plurality of interactions may include learnability, proficiency, effectiveness, efficiency, impact, productiveness, and collaboration. The learnability indicates time spent on understanding the task. The proficiency indicates the correctness of the task being performed. The effectiveness indicates a work quality in a prescribed time. The efficiency indicates an ability to do the task with fewer resources. The impact indicates the correctness of the task to the objective. The productiveness indicates speed of performing the task. The collaboration indicates an ability to select the right resource for the task.

The plurality of the parameters is determined using the first AI model included in the AI/ML module 216. The first AI model receives the data associated with the plurality of interactions of the user and outputs the plurality of the parameter associated with the plurality of interactions. The first AI model is trained based on the historical data associated with past interactions performed by the user in the industrial metaverse. In an embodiment, a pre-trained model may be used as the first AI model. In another embodiment, an on-device training may be performed for the first AI model.

The parameter analysis unit 308 analyses the plurality of parameters to determine a user experience of the user. The plurality of parameters is analysed using a second AI model. For instance, the parameter analysis unit 308 may analyse the plurality of parameters based on at least one of a scenario associated with the user, a cognitive profiling of the user, or an objective of the task. The parameter analysis unit 308 may further determine the user experience based on the analysis of the plurality of parameters. For example, the user experience may be determined as one of a good, bad, or frustrating experience.

The interaction experience enhancer toolkit engine 310 may determine the one or more cues when the determined user experience is negative. The one or more cues may be determined using the third AI model based on a set of pre-defined rules for each scenario associated with the user. For instance, the one or more cues may include one of a sensory cue, a navigation guidance, a recommendation, or feedback information. The sensory cue may include one of a visual cue, an audible signal, or a change in affordance for the user.

The interaction experience enhancer toolkit engine 310 may further output the determined one or more cues to the output unit 130. By outputting the one or more cues an area of interaction such as a cue or an affordance, a guidance instruction, or feedback given to the user is realigned to the context of the user.

In an embodiment, the interaction experience enhancer toolkit engine 310 may be auto updated as a self-learning model.

The output unit 130 displays the one or more cues to the user via the display unit 210. The output unit 130 may provide the one or more cues to the user to enhance the user experience by assisting the user to complete the task efficiently.

FIG. 4 illustrates an exemplary process flow depicting the method 400 for enhancing the user interaction experience in the computer-simulated environment, according to an embodiment of the present invention.

The method 400 includes a series of operation steps 402 through 412 performed by the processor 202 of the system 140.

At step 402, the processor 202 generates the plurality of avatars based on the plurality of users entering into the computer-simulated environment (industrial metaverse). The flow of the method 400 now proceeds to step 404.

At step 404, the processor 202 obtains, for each user of the plurality of users in real-time, data associated with the corresponding user while the corresponding avatar associated with the corresponding user is performing the plurality of interactions in the computer-simulated environment to complete the task. The flow of the method 400 now proceeds to step 406.

At step 406, the processor 202 determines, for each user, the plurality of parameters associated with the plurality of interactions by the corresponding avatar based on the obtained data. The plurality of parameters is determined using the first AI model. The flow of the method 400 now proceeds to step 408.

At step 408, the processor 202 analyses, for each user, the plurality of parameters to determine the user experience of the corresponding user. The plurality of parameters is analysed using the second AI model. The flow of the method 400 now proceeds to step 410.

At step 410, the processor 202 determines, for each user, the one or more cues when the determined user experience is negative. The one or more cues are determined using the third AI model. The flow of the method 400 now proceeds to step 412.

At step 412, the processor 202 provides, to each user, the one or more cues to enhance the user experience by assisting the corresponding user to complete the task efficiently.

In a first use case scenario, a first-time user experience problem is described where the user is spending too much time in picking up an object. In the first use case scenario, the user enters into a virtual world with the intent to pick up an object in the virtual world. For example, the user enters into the virtual world to solve a problem in which the user needs to pick up some object from one location and put it in a different location. Here the user intends to pick up the object.

Here, to perform the task of picking up some object from one location and putting it in some different location, the user needs to perform a plurality of interaction steps. For example, from where the user is sitting, the user needs to get up from the chair, then walk towards the object, see the object pick up the object, and finally view it by visual observation.

Now at each of these steps, the user has to get positive feedback. However, the user may not get positive feedback when the user is not able to do the job specifically. In the first use case scenario, if for picking up the object in the virtual world, the user has tried six times, but the user has not succeeded in picking up the object. In this scenario, the user experience will be frustrating, and the user will not get the positive feedback.

Therefore in the first use case scenario, the one or more cues are designed as sensory cues such as visual cues. In this case, one or more cues provided were not understandable, so the system changes the visual cue to a bounding box and increases the picking boundary so the user can pick the object and complete the task.

In a second use case scenario, a repetitive experience scenario is described where there is an anomaly in a factory floor and a maintenance person gets a notification. So now here the maintenance person needs to go to the location of the fault in the shortest possible time.

Here, for example, the maintenance person from his location in an augmented reality application goes to the desired location with map assistance but gets lost on the way during navigation. The maintenance person has estimated by historical data or by distance calculations that the navigation should take some 5 minutes and when the maintenance person is not able to understand the map and how to navigate in reality, the maintenance person gets frustrated.

Here, the system with the help of data understands the maintenance person is stuck and the desired interaction steps of providing the map, the starting point, and the ending point, and in the map providing the direction is not sufficient.

The system switches to additional interaction providing an alarm with spatial audio helping the maintenance person sense in which direction the sound is coming so the maintenance person can sensorily align in that direction. In addition, the system may also provide a leading line as a navigation guide to auto-enhancing the experience for the maintenance person.

In a third use case scenario, a typical office environment is described where the same space is used by HR, the maintenance person, and the design person, for their respective works. Every persona's objective of using the same virtual world is different, every individual has a different objective journey. Here, the HR person in the virtual world is struggling to use collaboration tools like white whiteboard in the virtual environment during his meetings with other stakeholders.

In the third use case scenario, the experience of each of the users is monitored, analysed, and auto enhanced to the individual personal needs based on the situation. In this case, the system finds the HR is not able to accomplish his task during collaboration by using the whiteboard, the system generates one or more cues as options and recommends the HR person that either the HR person can go through a self-learning module to learn how to use the virtual whiteboard, or the system can provide a set of different tools to the HR person to accomplish his tasks.

The present invention provides various technical advancements based on the key features discussed above. Firstly, the disclosed method incorporates data-based experience testing, which provides objective parameters for measurement. Secondly, the disclosed method automatically generates the analytics based on scenario, objective, and cognitive profiling which yield valuable insights. Thirdly, the disclosed method uses a toolkit to determine the one or more cues. The toolkit may be predefined as options or may be auto generated based on the scenarios. The adaptive toolkit continuously updates to enhance the end user's experience. Lastly, the disclosed method offers a scalable model for auto-enhancing user interactions across all users in the multiuser virtual environment.

The various actions, acts, blocks, steps, or the like in the flow diagrams may be performed in the order presented, in a different order, or simultaneously. Further, in some embodiments, some of the actions, acts, blocks, steps, or the like may be omitted, added, modified, skipped, or the like without departing from the scope of the invention.

Unless otherwise defined, all technical and scientific terms used herein have the same meaning as commonly understood by one ordinary skilled in the art to which this invention belongs. The system, methods, and examples provided herein are illustrative only and not intended to be limiting.

While specific language has been used to describe the present subject matter, any limitations arising on account thereto, are not intended. As would be apparent to a person in the art, various working modifications may be made to the method in order to implement the inventive concept as taught herein. The drawings and the foregoing description give examples of embodiments. Those skilled in the art will appreciate that one or more of the described elements may well be combined into a single functional element. Alternatively, certain elements may be split into multiple functional elements. Elements from one embodiment may be added to another embodiment.

The foregoing description of the specific embodiments will so fully reveal the general nature of the embodiments herein that others can, by applying current knowledge, readily modify and/or adapt for various applications such specific embodiments without departing from the generic concept, and, therefore, such adaptations and modifications should and are intended to be comprehended within the meaning and range of equivalents of the disclosed embodiments. It is to be understood that the phraseology or terminology employed herein is for the purpose of description and not of limitation. Therefore, while the embodiments herein have been described in terms of preferred embodiments, those skilled in the art will recognize that the embodiments herein can be practised with modification within the scope of the embodiments as described herein.

### List of Reference Numerals

| | |
|---|---|
| Environment | 100 |
| Application | 110 |
| input unit | 120 |
| Output unit | 130 |
| System | 140 |
| processor | 202 |
| Memory | 204 |
| communication unit | 206 |
| Input/Output (I/O) interface | 208 |
| display unit | 210 |
| sensor unit | 212 |
| database | 214 |
| AI/ML module | 216 |
| functional block diagram | 300 |
| avatar generation unit | 302 |
| data monitoring unit | 304 |
| data analysis unit | 306 |
| parameter analysis unit | 308 |
| interaction experience enhancer toolkit engine | 310 |
| Method | 400 |
| Method steps | 402, 404, 406, 408, 410, 412 |

## Claims

1. A computer-implemented method (400) for enhancing user interaction experience in a computer-simulated environment, the method (400) comprising:
obtaining (404), by one or more processors (202), for each user of a plurality of users in real-time, data associated with a corresponding user while a corresponding avatar associated with the corresponding user is performing a plurality of interactions in the computer-simulated environment to complete a task;
determining (406), by the one or more processors (202), for each user using a first Artificial Intelligence (AI) model, a plurality of parameters associated with the plurality of interactions by the corresponding avatar based on the obtained data;
analysing (408), by the one or more processors (202) for each user using a second AI model, the plurality of parameters to determine a user experience of the corresponding user;
determining (410), by the one or more processors (202) for each user using a third AI model, one or more cues based on the determined user experience is negative; and
providing (412), by the one or more processors (202) to each user, the one or more cues to enhance the user experience by assisting the corresponding user to complete the task efficiently.

2. The computer-implemented method (400) according to claim 1, wherein obtaining the data comprising:
generating, by the one or more processors (202), a plurality of avatars corresponding to the plurality of users in the computer-simulated environment based on the plurality of users entering into the computer-simulated environment;
tracking, by the one or more processors (202), for each user using one or more sensors, one or more activities of the corresponding user while the corresponding avatar associated with the corresponding user is performing the plurality of interactions; and
obtaining, by the one or more processors (202), for each user in the real-time, the data based on the tracking of the one or more activities of the corresponding user.

3. The computer-implemented method (400) according to claim 1 or claim 2, wherein the plurality of parameters include at least one of learnability, proficiency, effectiveness, efficiency, impact, productiveness, and collaboration.

4. The computer-implemented method (400) according to any of claims 1-3, wherein analysing the plurality of parameters to determine a user experience of the corresponding user comprises:
analysing, by the one or more processors (202), the plurality of parameters based on one of a scenario associated with the corresponding user, a cognitive profiling of the corresponding user, or an objective of the task; and
determining, by the one or more processors (202), the user experience based on the analysis of the plurality of parameters.

5. The computer-implemented method (400) according to any of claims 1-4, wherein the one or more cues are determined using the third AI model based on a set of pre-defined rules for each scenario associated with the corresponding user.

6. The computer-implemented method (400) according to any of claims 1-5, wherein the one or more cues include one of a sensory cue, a navigation guidance, a recommendation, or feedback information.

7. The computer-implemented method (400) according to claims 5, wherein the sensory cue includes one of a visual cue, an audible signal, or a change in affordance for the corresponding user.

8. A system (14) for enhancing user interaction experience in a computer-simulated environment, the system comprising:
a memory (204); and
one or more processors (202) communicatively coupled to the memory (204), wherein the memory (204) comprises programmable instructions which, when executed by the one or more processors (202), cause the one or more processors (202) to perform the method steps of any of claims 1 to 7.

9. A cloud server for enhancing user interaction experience in a computer-simulated environment, the cloud server comprising:
a memory (204); and
one or more processors (202) communicatively coupled to the memory (204), wherein the memory (204) comprises programmable instructions which, when executed by the one or more processors (202), cause the one or more processors (202) to perform the method steps of any of claims 1 to 7.

10. A computer-program product, having machine-readable instructions stored therein, which when executed by one or more processors (202), cause the one or more processors (202) to perform a method according to any of the claims 1 to 7.

11. A non-transitory computer readable medium encoded with executable instructions which, when executed by one or more processors (202), cause the one or more processors (202) to perform a method according to any one of the claims 1 to 7.
